# FASCICULE DE BREVET EUROPEEN

(11) **EP 1 385 298 B1**
(45) Date de publication et mention de la délivrance du brevet: **06.06.2012**
(21) Numéro de dépôt: 03291511.8
(22) Date de dépôt: 20.06.2003
(51) Int. Cl.: H04L 12/24, G06F 17/22, G06F 17/21

(54) **Dispositif et procédé de traitement de données pour la génération d'alarmes au sein d'un réseau de communications**
System und Verfahren für Datenverarbeitung zur Erzeugung des Alarms in einem Kommunikationsnetzwerk
System and method for data treatment for alarm generation in a communications network

(30) Priorité: 25.07.2002 FR 0209437
(43) Date de publication de la demande: 28.01.2004
(73) Titulaire: Alcatel Lucent, 75007 Paris (FR)
(72) Inventeur: Chevanne, Michel, 92140 Clamart (FR); Lapraye, Bertrand, 91190 Gif Sur Yvette (FR); Drugmand, Philippe, 92260 Fontenay aux Roses (FR)
(74) Mandataire: Nicolle, Olivier

(56) Documents cités:
- US-A- 5 202 977
- US-A- 5 987 513
- JAKOBSON G ET AL: "GRACE: Building Next Generation Event Correlation Services" IEEE, XP010376718

## Description

L'invention concerne le domaine de l'échange de données entre équipements d'un réseau de communications, et plus particulièrement celui de la gestion d'événements survenant au sein desdits équipements.

Les réseaux de communications comportent généralement un dispositif de gestion de réseau (ou NMS pour « Network Management System ») censé prévenir l'opérateur lorsqu'un événement survient dans un équipement. Plus précisément, chaque fois que survient un événement au sein d'un équipement, ou dans un matériel supervisé par cet équipement, ce dernier délivre une notification représentative dudit événement. Cette notification, plus connue sous l'expression anglaise « Trap » lorsque le protocole de gestion du réseau est le protocole SNMP (pour « Simple Network Management Protocol » RFC 2571-2580), est constituée de données primaires agencées selon des formats (ou protocoles) primaires. A réception de ces données primaires le gestionnaire NMS analyse leur contenu, puis s'il reconnaît le premier format il génère une alarme définie par des données secondaires agencées selon un unique format (ou protocole) secondaire prédéfini.

Or, du fait de leur grande variété, les équipements d'un réseau utilisent fréquemment des formats primaires d'échange différents, difficiles, voire impossibles, à modifier. Par conséquent, les gestionnaires NMS ne peuvent reconnaître qu'une partie des notifications qu'ils reçoivent.

Pour tenter de remédier à cet inconvénient, il a été proposé d'équiper le gestionnaire NMS d'un module de traitement de données primaires reposant soit sur un outil de corrélation de formats, soit sur des codes de programmes, soit encore sur des fichiers de configuration. La première solution, reposant sur un outil de corrélation, met en oeuvre des traitements dont la lenteur est rédhibitoire. La deuxième solution, reposant sur des codes de programmes, nécessite des développements très coûteux. Enfin, la troisième solution n'est pas suffisamment souple pour convenir aux situations dans lesquelles les formats primaires sont assez différents, ce qui est généralement le cas. De plus, ces solutions ne permettent généralement pas de synchroniser ou resynchroniser l'état d'alarme des équipements au niveau du gestionnaire NMS. Par conséquent, aucune solution proposée n'est réellement satisfaisante.

Le document US 5202977 concerne la gestion électronique de documents qui est un domaine fort lointain de celui de la gestion de réseaux. De surcroît, il ne s'agit pas dans cette solution de traiter des événements asynchrones mais plutôt d'appliquer au coup par coup, un script particulier pour convertir un document dans un autre format.

Le document US 5987513 concerne une solution de gestion de réseau utilisant un navigateur internet. Elle précise l'utilisation d'un fichier qui est converti en un ensemble de documents hypertextes. Toutefois, là aussi, il s'agit d'un traitement de paramétrage du système et aucunement d'un traitement des évènements asynchrones.

L'invention a donc pour but de remédier à tout ou partie des inconvénients précités.

Elle propose à cet effet un dispositif de traitement de données comportant des moyens de traitement capables de recevoir d'équipements d'un réseau de communications des données primaires (ou notification) définissant des événements dans au moins un format primaire, et de délivrer à un dispositif de gestion du réseau (ou gestionnaire NMS) des données secondaires définissant des alarmes représentatives des événements, dans un format secondaire.

Ce dispositif se caractérise par le fait que ses moyens de traitement comprennent un interpréteur (ou « scripting engine ») muni de règles de conversion, agencées sous forme de « scripts » associés aux différents formats primaires d'événement, et agencé de manière à convertir à l'aide de ces règles des données primaires, reçues dans l'un des formats primaires, en données secondaires dans le format secondaire interprétable par le dispositif de gestion.

Préférentiellement, l'interpréteur est agencé pour effectuer ses conversions dans un format secondaire de fichier de configuration à l'aide d'un langage interprété. Plus préférentiellement encore, le format secondaire de fichier de configuration est un format de type XML (pour « eXtensible Markup Language » - version 1.0 recommandée par le W3C), et/ou le langage interprété est JavaScript (tel que défini par ECMA-262 ECMAScript: A general purpose, cross-platform programming language).

Egalement de préférence, lorsque les données primaires sont respectivement associées à des identifiants d'événements, comme par exemple des identifiants d'objets (ou OID pour « Object Identifier »), l'interpréteur peut être agencé de manière à stocker certaines au moins des règles de configuration en correspondance d'identifiants d'événements connus. Dans ce cas, l'interpréteur peut être également agencé de manière à stocker au moins une règle de conversion définissant un script par défaut destiné aux données primaires qui sont associées à un identifiant d'événement inconnu.

Avantageusement, l'interpréteur peut être agencé de manière à déduire de certaines données primaires reçues (ou notification) des paramètres d'alarme lui permettant de délivrer au dispositif de gestion une alarme paramétrée. Dans ce cas, les alarmes peuvent être paramétrées par des valeurs « codées en dur » et/ou extraites des données primaires, et/ou des valeurs extraites d'un équipement. Dans cette dernière hypothèse, l'interpréteur doit être agencé pour extraire d'un équipement du réseau, dont l'état d'alarme est inconnu (de préférence de sa base d'informations de gestion ou MIB (pour « Management Information Base »)), des informations choisies représentatives de son état d'alarme, puis simuler l'émission de données primaires (ou notification) représentatives de ces informations d'état, de manière à générer une alarme destinée à signaler au dispositif de gestion l'état d'alarme de l'équipement.

Par ailleurs, les données primaires sont préférentiellement reçues dans des formats primaires de type SNMP (protocole de gestion de réseau Internet).

L'invention porte également sur un dispositif de gestion de réseau (ou gestionnaire NMS) comprenant un dispositif de traitement du type de celui présenté ci-avant.

L'invention porte en outre sur un procédé de traitement de données, dans lequel, à réception de données primaires (ou notification) transmises par des équipements d'un réseau de communications et définissant des événements dans au moins un format primaire, on délivre à un dispositif de gestion du réseau (ou gestionnaire NMS) des données secondaires définissant des alarmes représentatives des événements, dans un format secondaire.

Ce procédé se caractérise par le fait que son étape de génération consiste à convertir à l'aide de règles de conversion, agencées sous forme de « scripts » associés aux différents formats primaires d'événement, des données primaires, reçues dans l'un des formats primaires, en données secondaires dans le format secondaire interprétable par le dispositif de gestion.

Le procédé selon l'invention pourra comporter de nombreuses caractéristiques complémentaires qui pourront être prises séparément et/ou en combinaison, et en particulier:
- on peut procéder à la conversion dans un format secondaire de fichier de configuration à l'aide d'un langage interprété. Il est alors préférable que le format secondaire du fichier de configuration soit un format de type XML, et/ou que le langage interprété soit JavaScript ;
- en présence de données primaires associées respectivement à des identifiants d'événements, on peut associer certaines au moins des règles de conversion à des identifiants d'événements connus. Dans ce cas, il est avantageux que l'une au moins des règles de conversion soit définie par un script par défaut destiné à des données primaires associées à un identifiant d'événement inconnu ;
- on peut déduire de certaines données primaires reçues des paramètres d'alarme, de manière à délivrer au dispositif de gestion une alarme paramétrée, par exemple par des valeurs « codées en dur » et/ou des valeurs extraites des données primaires et/ou des valeurs extraites d'un équipement ;
- on peut extraire d'un équipement du réseau, dont l'état d'alarme est inconnu, des informations choisies représentatives de son état d'alarme, puis simuler l'émission de données primaires représentatives de ces informations d'état, de manière à générer une alarme destinée à signaler au dispositif de gestion l'état d'alarme de l'équipement. Cette extraction s'effectue préférentiellement dans la base d'informations de gestion de l'équipement concerné ;
- les données primaires sont préférentiellement reçues dans des formats primaires de type SNMP.

L'invention peut notamment être mise en oeuvre dans toutes les technologies réseaux devant être gérées, et notamment dans les réseaux de transmission (par exemple de type WDM, SONET, SDH), de données (par exemple de type Internet-IP ou ATM) ou de voix (par exemple de type classique, mobile ou NGN).

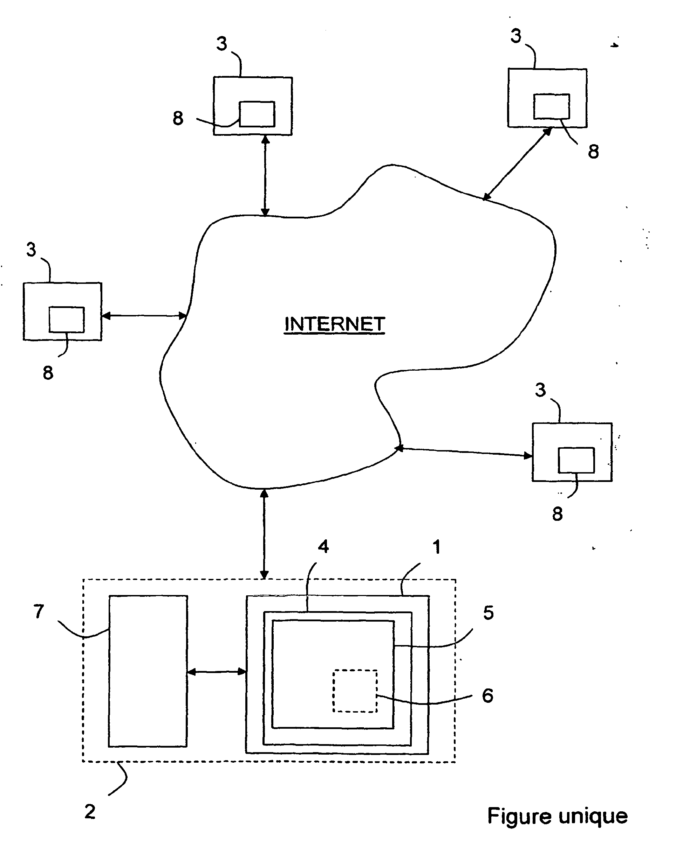

D'autres caractéristiques et avantages de l'invention apparaîtront à l'examen de la description détaillée ci-après, et de l'unique figure annexée qui illustre de façon schématique un exemple de réalisation d'un dispositif selon l'invention implanté dans un gestionnaire NMS d'un réseau de communications. Cette figure est, pour l'essentiel, de caractère certain. En conséquence, elle pourra non seulement servir à compléter l'invention, mais aussi contribuer à sa définition, le cas échéant.

Le dispositif de traitement 1 selon l'invention est destiné à alimenter en alarmes un gestionnaire NMS (pour « Network Management System ») 2 d'un réseau de communications, par exemple de type Internet. Dans l'exemple illustré sur l'unique figure, ce dispositif 1 est implanté dans le gestionnaire NMS 2, mais il pourrait être implanté dans un boîtier externe, couplé audit gestionnaire NMS.

Le réseau de communications comporte une multiplicité d'équipements de réseau 3, comme par exemple des serveurs, des terminaux, des commutateurs ou des routeurs, pouvant échanger des données selon un protocole de gestion de réseau avec le gestionnaire NMS 2.

Dans ce qui suit, on considère à titre d'exemple non limitatif que le réseau de communications est de type Internet (IP) et que le protocole de gestion du réseau est le protocole SNMP (pour « Simple Network Management Protocol » RFC 2571-2580). Bien entendu, l'invention s'applique à d'autres types de réseau, comme par exemple aux réseaux de transmission de type WDM, SONET ou SDH, de données de type ATM, ou de voix de type classique, mobile ou NGN, et à d'autres protocoles de gestion de réseau, comme par exemple TL1 ou CORBA. Les équipements 3 du réseau sont agencés pour délivrer au gestionnaire NMS 2 des notifications (ou messages), ici de type « Trap », définies par des données primaires agencées selon un format (ou protocole) primaire, ici de type SNMP, chaque fois que survient un événement en leur sein, ou dans un équipement ou matériel qu'ils contrôlent. Les données primaires d'une notification définissent par conséquent un événement survenu dans un équipement 3. Une multiplicité de formats primaires différents peut coexister au sein du réseau. Par ailleurs, chaque notification est préférentiellement associée à un identifiant représentatif d'un type d'événement.

Le dispositif de traitement 1 comprend un module de traitement 4 comportant un interpréteur (ou « scripting engine ») 5 disposant d'une multiplicité de règles de conversion agencées sous la forme de « scripts » associés à une multiplicité de formats primaires d'événement différents.

Plus précisément, à chaque format primaire correspond un script particulier (ou règle(s) de conversion), préférentiellement stocké dans une mémoire 6 en correspondance de l'un des identifiants d'événements contenus dans les notifications (ou Traps). Il est également préférable de prévoir au moins un script par défaut pour traiter (ou initier le traitement) les données primaires agencées selon un format primaire qui est associé à un identifiant d'événement inconnu.

Ainsi, lorsqu'un interpréteur 5 reçoit une notification (ou Trap), il en extrait l'identifiant d'événement et détermine la règle de configuration (ou script) stockée qui lui correspond. Il peut alors appliquer ce script (ou règle) aux données primaires définissant la notification, de manière à générer une alarme définie par des données secondaires agencées dans un langage interprété et selon un unique format secondaire interprétable par un module de contrôle 7 du gestionnaire NMS 2. En d'autres termes, les données primaires reçues, agencées selon un format primaire et représentatives d'un événement, sont « converties » en données secondaires agencées selon un format secondaire et dans un langage interprété.

A réception d'une telle alarme, le module de contrôle 7 du gestionnaire NMS 2 peut alors provoquer l'affichage de l'alarme sur un écran de contrôle dudit gestionnaire NMS et/ou décider d'action(s) à entreprendre dans le réseau pour tenir compte de l'alarme et/ou remédier à sa cause.

L'interpréteur 5 est agencé, à réception de données primaires, pour générer, à l'aide du script qui correspond aux données primaires reçues, une alarme définie par des données secondaires. Dans un mode de réalisation préférentiel, ces données secondaires sont agencées sous la forme d'un fichier de configuration d'alarme selon un format (ou protocole) secondaire, de préférence de type XML (pour « eXtensible Markup Language »), et dans un langage interprété (ou « scripting language »), de préférence de type JavaScript (tel que défini par ECMA-262 ECMAScript : A general purpose, cross-platform programming language). Plus préférentiellement encore, on choisit la version 1.0, du format XML recommandée par W3C.

Bien entendu, d'autres langages interprétés (ou « scripting languages ») et d'autres formats secondaires pourraient être envisagés. Ainsi, XML peut être remplacé par des formats textes propriétaires. De même, le langage JavaScript des scripts peut être remplacé, par exemple, par VisualBasic, TCL, Perl ou encore Python.

Dans cet exemple, l'identifiant d'événement, permettant à l'interpréteur 5 de déterminer le script correspondant au format primaire des données primaires reçues, est préférentiellement de type OID (« Object Identifier »- identifiant de type simple ASN.1 permettant d'identifier un objet tel qu'un événement), dans la mesure où le langage interprété, utilisé par l'interpréteur 5 pour générer les fichiers de configuration (données secondaires), est JavaScript.

La syntaxe utilisée pour générer les fichiers de configuration d'alarme (ou données secondaires) est donc ici une combinaison de XML et de JavaScript. Plus précisément, d'une première part, la structure générale du fichier est de type XML, d'une deuxième part, les données secondaires, définissant l'alarme associée à une notification OID reçue, sont toujours encadrées par deux blocs (ou « tags ») XML, d'une troisième part, chaque champ de l'alarme possède une unique entrée, et d'une quatrième part, chaque entrée de l'alarme est soit une constante, soit une expression JavaScript.

Ainsi, lorsque toutes les entrées de l'alarme sont des constantes, le fichier de configuration d'alarme est principalement de type XML. Par exemple, il se présente sous la forme <SEVERITY>Critical</SEVERITY>. Lorsque certaines au moins des entrées de l'alarme sont des expressions JavaScript, un maximum de souplesse peut être obtenu. Le fichier se présente alors, par exemple, sous la forme <SEVERITY> (trapget(« 1.2.3.4 »)==2) ? Critical : Major</SEVERITY>.

Certains champs de l'alarme générée peuvent être optionnels ou présenter une valeur par défaut.

Grâce aux scripts, il est possible de tirer pleinement partie des informations contenues dans les données primaires qui constituent les notifications reçues. De nombreux traitements, notamment logiques et/ou calculatoires, peuvent être ainsi appliqués aux paramètres qui définissent les événements signalés par les équipements 3 du réseau. Par conséquent, l'interpréteur 5 peut non seulement générer une alarme représentative d'un événement, mais également accompagner cette alarme de paramètres (ou de valeurs de paramètres) susceptibles d'en faciliter le traitement au niveau du gestionnaire NMS 2.

Les alarmes peuvent ainsi être paramétrées par des valeurs « codées en dur » et/ou extraites de la notification (ou Trap) et/ou extraites d'un équipement dont on a reçu une notification (ou Trap).

Afin de mettre en oeuvre cette troisième possibilité, l'interpréteur 5 doit être agencé de manière à adresser à un équipement, dont il a éventuellement reçu des données primaires représentatives d'un état d'alarme inconnu, un message requérant de sa part certaines informations susceptibles de permettre la détermination dudit état d'alarme. Généralement, ces informations sont contenues dans la base d'informations de gestion 8 (ou MIB pour « Management Information Base ») de l'équipement 3.

Grâce à cet agencement lui permettant d'extraire des informations d'un équipement 3 distant, et notamment de sa MIB 8, le dispositif selon l'invention 1 peut assurer une fonction de synchronisation et resynchronisation de l'état d'alarme de chaque équipement. En effet, chaque fois que le gestionnaire NMS du réseau 2 (ou son dispositif de traitement 1) est redémarré ou déconnecté du reste du réseau, par exemple en cas de panne ou d'intervention de maintenance, il doit être, d'une part, resynchronisé par rapport aux états d'alarmes respectifs des équipements 3 du réseau qui étaient présents au moment de sa déconnexion, lesquels états ont pu évoluer, et d'autre part, synchronisé par rapport aux états d'alarmes respectifs des nouveaux équipements 3 du réseau, lesquels états lui sont inconnus. Il en va de même chaque fois qu'un nouvel équipement 3 se connecte au réseau ou qu'un ancien équipement se reconnecte au réseau.

Cette fonction peut être assurée par une ou plusieurs règles, par exemple stockées dans la mémoire 6, soit automatiquement lors de chaque mise en fonctionnement et/ou chaque fois que l'interpréteur 5 est averti d'une (re)connexion par le module de contrôle 7 du gestionnaire NMS 2 du réseau, soit semi-automatiquement chaque fois que la personne responsable de la gestion du réseau en donne l'ordre à l'interpréteur 5.

La ou les règles de (re)synchronisation sont agencées pour examiner le contenu de la MIB du ou des équipements 3 désignés, de manière à extraire les informations (paramètre(s) ou valeur(s) de paramètre(s)) définissant leur(s) état(s) d'alarme. Mais, ces règles peuvent également servir à vérifier ou contrôler la valeur d'un ou plusieurs paramètres. Comme indiqué ci-dessus, dans certaines situations tous les équipements du réseau, qui dialoguent avec le gestionnaire NMS 2, peuvent faire l'objet d'un examen à l'aide des règles de (re)synchronisation.

La ou les règles de (re)synchronisation peuvent être agencées de manière à simuler l'émission d'une notification (ou Trap) à l'intérieur du gestionnaire NMS 2. Plus précisément, elles indiquent les notifications (ou Traps) que l'équipement 3 aurait dû envoyer pour passer d'un état sans alarme à son état en cours. Ces notifications (ou Traps) simulées font ensuite l'objet d'une conversion semblable à celle appliquée aux notifications réelles.

Le module de traitement 4 du dispositif 1, et son interpréteur 5, peuvent être respectivement réalisés sous la forme de circuits électroniques, de modules logiciels (ou informatiques), ou d'une combinaison de circuits et de logiciels.

L'invention offre également un procédé de traitement de données, dans lequel, à réception de données primaires transmises par des équipements 3 d'un réseau de communications et définissant des événements dans au moins un format primaire, on délivre à un dispositif de gestion du réseau 2 (ou gestionnaire NMS) des données secondaires qui définissent des alarmes représentatives de ces événements, dans un format secondaire.

Celui-ci peut être mis en oeuvre à l'aide du dispositif de traitement présenté ci-avant. La fonction principale et les sous-fonctions optionnelles assurées par les étapes de ce procédé étant sensiblement identiques à celles assurées par les différents moyens constituant le dispositif de traitement 1, seule sera résumée ci-après l'étape mettant en oeuvre la fonction principale du procédé selon l'invention.

Ce procédé se caractérise par le fait que son étape de génération consiste à convertir à l'aide de règles de conversion, agencées sous forme de « scripts » associés aux différents formats primaires d'événement, des données primaires, reçues dans l'un des formats primaires, en données secondaires dans le format secondaire interprétable par le dispositif de gestion 2.

Grâce à l'invention, il n'est plus nécessaire de recourir à la programmation, ce qui permet de réduire les coûts de développement. De plus, les scripts procurent une grande souplesse d'utilisation et une grande rapidité de traitement (plusieurs dizaines de notifications (ou Traps) par seconde), et permettent une adaptation rapide à tous les types de formats primaires. En outre, l'invention permet une (re)synchronisation.

L'invention ne se limite pas aux modes de réalisation de procédé et dispositifs décrits ci-avant, seulement à titre d'exemple, mais elle englobe toutes les variantes que pourra envisager l'homme de l'art dans le cadre des revendications ci-après.

## Revendications

1. Dispositif de traitement de données (1) comportant des moyens de traitement (4) propres à recevoir d'équipements (3) d'un réseau de communications des données primaires définissant des événements dans au moins un format primaire, et à délivrer à un dispositif de gestion dudit réseau (2) des données secondaires définissant des alarmes représentatives desdits événements, dans un format secondaire, **caractérisé en ce que** lesdits moyens de traitement (4) comprennent un interpréteur (5) muni de règles de conversion, agencées sous forme de « scripts » associés aux différents formats primaires d'événement, et agencé pour convertir à l'aide desdites règles des données primaires, reçues dans l'un desdits formats primaires, en données secondaires dans ledit format secondaire interprétable par ledit dispositif de gestion (2), **en ce que**, en présence de données primaires associées respectivement à des identifiants d'événements, ledit interpréteur (5) est agencé pour stocker certaines au moins desdites règles en correspondance d'identifiants d'événements connus, et **en ce que** ledit interpréteur (5) est agencé pour stocker au moins une règle de conversion définissant un script par défaut destiné aux données primaires associées à un identifiant d'événement inconnu..

2. Dispositif selon la revendication 1, **caractérisé en ce que** ledit interpréteur (5) est agencé pour effectuer lesdites conversions dans un format secondaire de fichier de configuration à l'aide d'un langage interprété.

3. Dispositif selon la revendication 2, **caractérisé en ce que** ledit format secondaire de fichier de configuration est un format choisi dans un groupe comprenant XML et les formats textes propriétaires.

4. Dispositif selon l'une des revendications 2 et 3, **caractérisé en ce que** ledit langage interprété est choisi dans un groupe comprenant au moins JavaScript, VisualBasic, TCL, Perl et Python.

5. Dispositif selon l'une des revendications 1 à 4, **caractérisé en ce que** ledit interpréteur (5) est agencé pour déduire de certaines données primaires reçues des paramètres d'alarme, de manière à délivrer audit dispositif de gestion (2) une alarme paramétrée.

6. Dispositif selon la revendication 5, **caractérisé en ce que** ledit interpréteur (5) est agencé pour délivrer au dit dispositif de gestion (2) des alarmes paramétrées par des valeurs « codées en dur ».

7. Dispositif selon l'une des revendications 5 et 6, **caractérisé en ce que** ledit interpréteur (5) est agencé pour délivrer audit dispositif de gestion (2) des alarmes paramétrées par des valeurs extraites desdites données primaires.

8. Dispositif selon l'une des revendications 1 à 7, **caractérisé en ce que**, lorsque l'état d'alarme d'un équipement (3) du réseau est inconnu, ledit interpréteur (5) est agencé pour extraire dudit équipement (3) des informations choisies représentatives dudit état d'alarme, puis simuler l'émission de données primaires représentatives desdites informations d'état, de manière à générer une alarme destinée à signaler au dispositif de gestion (2) l'état d'alarme dudit équipement (3).

9. Dispositif selon la revendication 8, **caractérisé en ce que** ledit interpréteur (5) est agencé pour délivrer audit dispositif de gestion (2) des alarmes paramétrées par des valeurs extraites de l'équipement duquel il a reçu des données primaires.

10. Dispositif selon l'une des revendications 8 et 9, **caractérisé en ce que** ledit interpréteur (5) est agencé pour extraire lesdites informations ou valeurs d'une base d'informations de gestion (8) de l'équipement concerné.

11. Dispositif selon l'une des revendications 1 à 10, **caractérisé en ce que** lesdites données primaires sont reçues dans des formats primaires de type SNMP.

12. Dispositif de gestion de réseau (2), **caractérisé en ce qu'**il comprend un dispositif de traitement (1) selon l'une des revendications précédentes.

13. Procédé de traitement de données, dans lequel, à réception de données primaires transmises par des équipements (3) d'un réseau de communications et définissant des événements dans au moins un format primaire, on délivre à un dispositif de gestion du réseau (2) des données secondaires définissant des alarmes représentatives desdits événements, dans un format secondaire, **caractérisé en ce que** ladite génération consiste à convertir à l'aide de règles de conversion, agencées sous forme de « scripts » associés aux différents formats primaires d'événement, des données primaires, reçues dans l'un desdits formats primaires, en données secondaires dans ledit format secondaire interprétable par ledit dispositif de gestion (2), **en ce que**, en présence de données primaires associées respectivement à des identifiants d'événements, on associe certaines au moins desdites règles de conversion à des identifiants d'événements connus, et, **en ce que** l'une au moins desdites règles de conversion définit un script par défaut destiné à des données primaires associées à un identifiant d'événement inconnu.

14. Procédé selon la revendication 13, **caractérisé en ce que** l'on procède à la conversion dans un format secondaire de fichier de configuration à l'aide d'un langage interprété.

15. Procédé selon la revendication 14, **caractérisé en ce que** ledit format secondaire de fichier de configuration est un format choisi dans un groupe comprenant XML et les formats textes propriétaires.

16. Procédé selon l'une des revendications 14 et 15, **caractérisé en ce que** ledit langage interprété est choisi dans un groupe comprenant au moins JavaScript, VisualBasic, TCL, Perl et Python.

17. Procédé selon l'une des revendications 13 à 16, **caractérisé en ce que** l'on déduit de certaines données primaires reçues des paramètres d'alarme, de manière à délivrer audit dispositif de gestion (2) une alarme paramétrée.

18. Procédé selon la revendication 17, **caractérisé en ce que** l'on délivre audit dispositif de gestion (2) des alarmes paramétrées par des valeurs « codées en dur ».

19. Procédé selon l'une des revendications 17 et 18, **caractérisé en ce que** l'on délivre audit dispositif de gestion (2) des alarmes paramétrées par des valeurs extraites desdites données primaires.

20. Procédé selon l'une des revendications 13 à 19, **caractérisé en ce que**, lorsque l'état d'alarme d'un équipement (3) du réseau est inconnu, on extrait dudit équipement (3) des informations choisies représentatives dudit état d'alarme, puis on simule l'émission de données primaires représentatives desdites informations d'état, de manière à générer une alarme destinée à signaler au dispositif de gestion (2) l'état d'alarme dudit équipement (3).

21. Procédé selon la revendication 20, **caractérisé en ce que** l'on délivre audit dispositif de gestion (2) des alarmes paramétrées par des valeurs extraites de l'équipement (3) duquel il a reçu des données primaires.

22. Procédé selon l'une des revendications 20 et 21, **caractérisé en ce que** l'on extrait lesdites informations ou valeurs d'une base d'informations de gestion (8) de l'équipement (3) concerné.

23. Procédé selon l'une des revendications 13 à 22, **caractérisé en ce que** lesdites données primaires sont reçues dans des formats primaires de type SNMP.

24. Utilisation des procédé, dispositif de traitement (1) et dispositif de gestion (2) selon l'une des revendications précédentes dans les technologies réseaux devant être gérées.

25. Utilisation selon la revendication 24, **caractérisé en ce que** lesdites technologies réseaux sont choisies dans un groupe comprenant les réseaux de transmission, en particulier de type WDM, SONET et SDH, de données, en particulier de type Internet-IP et ATM, et de voix, en particulier de type classique, mobile et NGN.

## Claims

1. A data processing device (1) comprising processing means (4) capable of receiving from a communication network's equipment (3) primary data defining events in at least one primary format, and to deliver to a management device of said network (2) secondary data defining alarms representative of said events, in a secondary format, **characterized in that** said processing means (4) comprise an interpreter (5) equipped with conversion rules, configured in the form of "scripts" associated with the various primary event formats, and operative to convert, with the help of said rules, the primary data received in one of said primary formats into secondary data in said secondary format interpretable by said management device (2), and **in that**, in the presence of primary data respectively associated with event identifiers, said interpreter (5) is operative to store at least some of said rules as matches for known event identifiers, and
**in that** said interpreter (5) is operative to store at least one conversion rule defining a default script intended for the primary data associated with an unknown event identifier.

2. A device according to claim 1, **characterized in that** said interpreter (5) is operative to carry out said conversions in a secondary configuration file format with the help of an interpreted language.

3. A device according to claim 2, **characterized in that** said secondary configuration file format is a format chosen from a group comprising XML and proprietary text formats.

4. A device according to one of the claims 2 and 3, **characterized in that** said interpreted language is chosen from a group comprising at least JavaSeript, VisualBasic, TCL, Perl and Python.

5. A device according to one of the claims 1 to 4, **characterized in that** said interpreter (5) is operative to deduce alarm settings from certain received primary data, so as to deliver a set alarm to said management device (2).

6. A device according to claim 5, **characterized in that** said interpreter (5) is operative to deliver to said management device (2) alarms set by "hard-coded" values.

7. A device according to one of the claims 5 and 6, **characterized in that** said interpreter (5) is operative to deliver to said management device (2) alarms set by values extracted from said primary data.

8. A device according to one of the claims 1 to 7, **characterized in that**, when the alarm state of equipment (3) of the network is unknown, said interpreter (5) is operative to extract from said equipment (3) chosen information representative of said alarm state, then simulate the emission of primary data representative of said state information, so as to generate an alarm intended to report said equipment's (3) alarm state to the management device (2).

9. A device according to claims 8, **characterized in that** said interpreter (5) is operative to deliver to said management device (2) alarms set by values extracted from the equipment from which it received primary data.

10. A device according to one of the claims 8 and 9, **characterized in that** said interpreter (5) is operative to extract those information or values from a management information base (8) of the equipment in question.

11. A device according to one of the claims 1 to 10, **characterized in that** said primary data is received in SUMP primary formats.

12. A network management device (2), **characterized in that** it comprises a processing device (1) according to one of the previous claims.

13. A data processing method, wherein, upon receiving primary data transmitted by equipment (3) of the communications network and defining events in at least one primary format, secondary data defining alarms representative of said events is delivered to a management device of the network (2), in a secondary format, **characterized in that** said generation consists of conversing, with the help of conversion rules configured in the form of "scripts" associated with the various primary event formats, primary data received in one of said primary formats, into secondary data in said secondary format interpretable by said management device (2), and **in that**, in the presence of primary data respectively associated with event identifiers, at least some of said conversion rules are associated with known event identifiers, and, **in that** at least one of said conversion rules defines a default script intended for primary data associated with an unknown event identifier.

14. A method according to claim 13, **characterized in that** the conversion is carried out in a secondary configuration file format with the help of an interpreted language.

15. A method according to claim 14, **characterized in that** said secondary configuration file format is a format chosen from a group comprising XML and proprietary text formats.

16. A method according to one of the claims 14 and 15, **characterized in that** said interpreted language is chosen from a group comprising at least JavaScript, VisualBasic, TCL, Perl and Python.

17. A method according to one of claims 13 to 16, **characterized in that** alarm parameters are deduced from some received primary data, so as to deliver a set alarm to said management device (2).

18. A method according to claim 17, **characterized in that** alarms set by "hard-coded" values are delivered to said management device (2).

19. A method according to one of the claims 17 and 18, **characterized in that** alarms set by values extracted from said primary data are delivered to said management device (2).

20. A method according to one of the claims 13 to 19, **characterized in that**, when the alarm state of an equipment (3) of the network is unknown, chosen information representative of said alarm state is extracted from said equipment (3), then the emission of primary data representative of said state information is simulated, so as to generate an alarm intended to report said equipment's (3) alarm state to the management device (2).

21. A method according to claim 20, **characterized in that** alarms are delivered to said management device (2) that are set by values extracted from the equipment (3) from which it received primary data

22. A method according to one of the claims 20 and 21, **characterized in that** said information or values are extracted from a management information base (8) of the equipment (3) in question.

23. A method according to one of the claims 13 to 22, **characterized in that** said primary data is received in SNMP primary formats.

24. A use of the method, processing device (1) and management device (2) according to one of the preceding claims in the network technologies that are to be managed.

25. A use according to claim 24, **characterized in that** said network technologies are chosen from a group comprising transmission networks, in particular WDM, SONET, and SDH networks; data networks, in particular Internet-IP and ATM networks; and voice networks, in particular conventional, mobile, and NGN networks.

## Patentansprüche

1. Datenverarbeitungsvorrichtung (1) mit Verarbeitungsmitteln (4) zum Empfangen, von Geräten (3) eines Kommunikationsnetzwerks, von primären Daten, welche Ereignisse in mindestens einem primären Format definieren, und zum Liefern, an eine Vorrichtung zur Verwaltung des besagten Netzwerks (2), von sekundären Daten, welche für die besagten Ereignisse repräsentative Alarme definieren, in einem sekundären Format, **dadurch gekennzeichnet, dass** die besagten Verarbeitungsmittel (4) einen Interpreter (5) umfassen, welcher mit Konvertierungsregeln in der Form von mit den verschiedenen primären Ereignisformaten assoziierten "Skripten" versehen und dazu ausgelegt ist, anhand der besagten Regeln primäre Daten, welche in einem der besagten primären Formate empfangen wurden, in sekundäre Daten in dem besagten sekundären Format, welches von der besagten Verwaltungsvorrichtung (2) interpretiert werden kann, zu konvertieren, und dass der besagte Interpreter (5) bei Vorliegen von jeweils mit Ereigniskennungen assoziierten primären Daten dazu ausgelegt ist, zumindest bestimmte der besagten Regeln entsprechend bekannter Ereigniskennungen zu speichern, und dass der besagte Interpreter (5) dazu ausgelegt ist, mindestens eine Konvertierungsregel, weiche ein für die mit einer unbekannten Ereigniskennung assoziierten primären Daten bestimmtes Standardskript definiert, zu speichern,

2. Vorrichtung nach Anspruch 1 **dadurch gekennzeichnet, dass** der besagte Interpreter (5) für das Durchführen der besagten Konvertierungen von Konfigurationsdateien in ein sekundäres Format anhand einer interpretierten Sprache ausgelegt ist.

3. Vorrichtung nach Anspruch 2, **dadurch gekennzeichnet, dass** das besagte sekundäre Konfigurationsdateiformat ein in einer Gruppe bestehend aus XML und den proprietären Textformaten ausgewähltes Format ist.

4. Vorrichtung nach einem der Ansprüche 2 und 3, **dadurch gekennzeichnet, dass** die besagte interpretierte Sprache in einer Gruppe mindestens bestehend aus JavaScript, VisualBasic, TCL, Perl und Python ausgewählt wird.

5. Vorrichtung nach einem der Ansprüche 1 bis 4, **dadurch gekennzeichnet, dass** der besagte Interpreter (5) für das Ableiten von Alarmparametern von bestimmten empfangenen primären Daten ausgelegt ist, um einen parametrierten Alarm an die besagte Verwaltungsvorrichtung (2) zu liefern.

6. Vorrichtung nach Anspruch 5, **dadurch gekennzeichnet, dass** der besagte Interpreter (5) für die Lieferung von mit "fest codierten" Werten parametrierten Alarmen an die besagte Verwaltungsvorrichtung (2) ausgelegt ist.

7. Vorrichtung nach einem der Ansprüche 5 und 6, **dadurch gekennzeichnet, dass** der besagte Interpreter (5) für die Lieferung von mit aus den besagten primären Daten extrahierten Werten parametrierten Alarmen an die besagte Verwaltungsvorrichtung (2) ausgelegt ist.

8. Vorrichtung nach einem der Ansprüche 1 bis 7, **dadurch gekennzeichnet, dass**, wenn der Alarmzustand eines Gerätes (3) des Netzwerks unbekannt ist, der besagte Interpreter (5) für das Extrahieren von ausgewählten, für den besagten Alarmzustand repräsentative Informationen aus dem besagten Gerät (3) und die anschließende Simulation der Ausgabe von für die besagten Zustandsinformationen repräsentativen primären Daten, um einen Alarm zu erzeugen, welcher dazu bestimmt ist, den Alarmzustand des besagten Gerätes (3) an die Verwaltungsvorrichtung (2) zu signalisieren, aufgelegt ist.

9. Vorrichtung nach Anspruch 8, **dadurch gekennzeichnet, dass** der besagte Interpreter (5) für die Ausgabe von mit den aus dem Gerät, von welchem er primäre Daten empfangen hat, extrahierten parametrierten Alarmen an die besagte Verwaltungsvorrichtung (2) ausgelegt ist.

10. Vorrichtung nach einem der Ansprüche 8 und 9, **dadurch gekennzeichnet, dass** der besagte Interpreter (5) für das Extrahieren der besagten Informationen oder Werte aus einem Verwaltungsdatenspeicher (8) des betroffenen Gerätes ausgelegt ist.

11. Vorrichtung nach einem der Ansprüche 1 bis 10, **dadurch gekennzeichnet, dass** die besagten primären Daten in primären Formaten vom Typ SNMP empfangen werden.

12. Netzwerkverwaltungsvorrichtung (2), **dadurch gekennzeichnet, dass** sie eine Verarbeitungsvorrichtung (1) gemäß einem der vorstehenden Ansprüche umfasst.

13. Verfahren zur Verarbeitung von Daten, wobei man bei Empfang von primären Daten, welche von Geräten (3) eines Kommunikationsnetzwerks übertragen wurden und Ereignisse in mindestens einem primären Format definieren, sekundäre Daten, welche für die besagten Ereignisse repräsentative Alarme definieren, in einem sekundären Format an eine Netzwerkverwaltungsvorrichtung (2) liefert, **dadurch gekennzeichnet, dass** das besagte Erzeugen darin besteht, primäre Daten, die in einem der besagten primären Formate empfangen wurden, anhand von Konvertierungsregeln in der Form von mit den verschiedenen primären Ereignisformaten assoziierten "Skripten" in sekundäre Daten in dem besagten sekundären Format, welches von der besagten Verwaltungsvorrichtung (2) interpretiert werden kann, zu konvertieren, und dass man bei Vorliegen von jeweils mit Ereigniskennungen assoziierten primären Daten zumindest bestimmte der besagten Konvertierungsregeln mit bekannten Ereigniskennungen assoziiert, und dass mindestens eine der Konvertierungsregeln ein für die mit einer unbekannten Ereigniskennung assoziierten primären Daten bestimmtes Standardskript definiert.

14. Verfahren nach Anspruch 13, **dadurch gekennzeichnet, dass** man die Konvertierung in ein sekundäres Konfigurationsdateiformat anhand einer interpretierten Sprache durchführt.

15. Verfahren nach Anspruch 14, **dadurch gekennzeichnet, dass** das besagte sekundäre Konfigurationsdateiformat ein in einer Gruppe bestehend aus XML und den proprietären Textformaten ausgewähltes Format ist.

16. Verfahren nach einem der Ansprüche 14 und 15, **dadurch gekennzeichnet, dass** die besagte interpretierte Sprache in einer Gruppe mindestens bestehend aus JavaScript, VisualBasic, TCL, Perl und Python ausgewählt wird.

17. Verfahren nach einem der Ansprüche 13 bis 16, **dadurch gekennzeichnet, dass** man von bestimmten empfangenen primären Daten Alarmparameter ableitet, um einen parametrierten Alarm an die besagte Verwaltungsvorrichtung (2) auszugeben.

18. Verfahren nach Anspruch 17, **dadurch gekennzeichnet, dass** man mit "fest codierten" Werten parametrierte Alarme an die besagte Verwaltungsvorrichtung (2) liefert.

19. Verfahren nach einem der Ansprüche 17 und 18, **dadurch gekennzeichnet, dass** man mit aus den besagten primären Daten extrahierten Werten parametrierte Alarme an die besagte Verwaltungsvorrichtung (2) liefert.

20. Verfahren nach einem der Ansprüche 13 bis 19, **dadurch gekennzeichnet, dass**, wenn der Alarmzustand eines Gerätes (3) des Netzwerks unbekannt ist, man aus dem besagten Gerät (3) ausgewählte, für den besagten Alarmzustand repräsentative Informationen extrahiert und anschließend die Ausgabe von für die besagten Zustandsinformationen repräsentativen primären Daten simuliert, um einen Alarm zu erzeugen, welcher dazu bestimmt ist, den Alarmzustand des besagten Gerätes (3) an die Verwaltungsvorrichtung (2) zu signalisieren.

21. Verfahren nach Anspruch 20, **dadurch gekennzeichnet, dass** man mit aus dem Gerät (3), von welchem er primäre Daten empfangen wurden, extrahierten Werten parametrierte Alarme an die besagte Verwaltungsvorrichtung (2) liefert.

22. Verfahren nach einem der Ansprüche 20 und 21, **dadurch gekennzeichnet, dass** man die besagten Informationen oder Werte aus einem Verwaltungsdatenspeicher (8) des betroffenen Gerätes (3) extrahiert.

23. Verfahren nach einem der Ansprüche 13 bis 22, **dadurch gekennzeichnet, dass** die besagten primären Daten in primären Formaten vom Typ SNMP empfangen werden.

24. Verwendung des Verfahrens, der Bearbeitungsvorrichtung (1) und der Verwaltungsvorrichtung (2) gemäß einem der vorstehenden Ansprüche in zu verwaltenden Netzwerktechnologien.

25. Verwendung nach Anspruch 24, **dadurch gekennzeichnet, dass** die besagten Netzwerktechnologien in einer Gruppe bestehend aus den Übertragungsnetzwerken, insbesondere vom Typ WDM, SONET und SDH, Daten, insbesondere vom Typ Internet-IP und ATM, und Stimmen, insbesondere vom Typ klassisch, mobil und NGN, ausgewählt werden.
